# EUROPEAN PATENT APPLICATION

(11) **EP 4 776 697 A1**
(43) Date of publication of application: **15.07.2026**
(21) Application number: 23951492.0
(22) Date of filing: 06.09.2023
(51) Int. Cl.: H04W 48/06

(54) **TERMINAL, BASE STATION, AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); SASAGAWA, Tetsuhiro, Tokyo 100-6150 (JP); HIKOSAKA, Maoki, Tokyo 100-6150 (JP)
(74) Representative: Hoffmann Eitle
(86) International application number: PCT/JP2023/032554
(87) International publication number: WO 2025/052594

(57) **Abstract**

A terminal includes a receiving unit configured to receive, from a base station, barring information for restricting a terminal that uses a provisional profile for access; a control unit configured to, in a case of executing access using the provisional profile, derive a first access identity for the access using the provisional profile and a first cause value corresponding to the first access identity, and acquire, based on the first access identity, a first check result indicating whether the access is permitted to a network restricted by the barring information; and a transmitting unit configured to transmit, to the base station, a wireless connection configuration request including the first cause value in a case where the first check result indicates that the access is permitted.

## Description

### TECHNICAL FIELD

The present invention relates to a terminal, a base station, and a communication method in a communication system.

### BACKGROUND ART

In 3GPP (registered trademark; the 3rd Generation Partnership Project), studies are underway into a wireless communication scheme referred to as "5G" or "NR (New Radio)" (hereinafter, collectively referred to as "5G" or "NR") to achieve increased system capacity, higher data transmission rates, and reduced latency in the wireless section, etc. In 5G systems, studies on various wireless technologies have been conducted to meet requirements for realizing a throughput of 10 Gbps or higher and a latency of 1 ms or less in the wireless section.

In NR systems, studies have been conducted on a network architecture that includes a 5GC (5G Core Network) corresponding to the EPC (Evolved Packet Core), which serves as the core network in the LTE (Long Term Evolution) architecture, and an NG-RAN (Next Generation Radio Access Network) corresponding to the E-UTRAN (Evolved Universal Terrestrial Radio Access Network), which serves as the RAN (Radio Access Network) in the LTE architecture (see, for example, Non-Patent Document 1).

Further, studies have also begun on systems beyond 5G, including future 6G systems. In the future system, a wide range of requirements, such as those related to power consumption, latency, and communication speed, are expected to be imposed on increasingly diverse types of terminals, including Ambient IoT devices such as wireless tags and XR devices that extend virtual reality.

### CITATION LIST

### Non-Patent Literature

Non-Patent Document 1: 3GPP TS 23.501 V18.2.2 (2023-07)
Non-Patent Document 2: 3GPP TS 24.501 V18.2.1 (2023-03)
Non-Patent Document 3: 3GPP TS 38.413 V17.4.0 (2023-03)
Non-Patent Document 4: 3GPP TS 38.331 V17.5.0 (2023-06)

### SUMMARY OF INVENTION

### TECHNICAL PROBLEM

Before a terminal starts to use a network with an operational profile based on a formal contract with a mobile operator, the terminal accesses the network using a provisional profile for performing initial setup. Herein, in access control executed during disasters, events, etc., terminals that access the network using a provisional profile should be assigned a lower restriction-bypass rate than terminals that access the network using an operational profile.

However, in existing network specifications, it is not possible to distinguish, for access control, between terminals accessing the network with a provisional profile and terminals accessing the network with an operational profile.

The present invention has been made in view of the above, and an object of the present invention is to execute access control, in a communication system, on terminals that access the network using a provisional profile, in distinction from terminals that access the network using an operational profile.

### SOLUTION TO PROBLEM

According to a disclosed technique, a terminal is provided, which includes a receiving unit configured to receive, from a base station, barring information for restricting a terminal that uses a provisional profile for access; a control unit configured to, in a case of executing access using the provisional profile, derive a first access identity for the access using the provisional profile and a first cause value corresponding to the first access identity, and acquire, based on the first access identity, a first check result indicating whether the access is permitted to a network restricted by the barring information; and a transmitting unit configured to transmit, to the base station, a wireless connection configuration request including the first cause value in a case where the first check result indicates that the access is permitted.

### ADVANTAGEOUS EFFECTS OF INVENTION

According to the disclosed technique, access control can be executed, in the communication system, on terminals that access the network using a provisional profile, in distinction from terminals that access the network using an operational profile.

### BRIEF DESCRIPTION OF DRAWINGS

[Fig. 1] is a drawing for describing an example of a communication system.
[Fig. 2] is a drawing for describing an example of the communication system under a roaming environment.
[Fig. 3] is a drawing illustrating an example of a sequence diagram according to an embodiment of the present invention.
[Fig. 4] is a drawing illustrating an example of functional structure of a base station 10 and a network node 30 according to an embodiment of the present invention.
[Fig. 5] is a drawing illustrating an example of a functional structure of a terminal 20 according to an embodiment of the present invention.
[Fig. 6] is a drawing illustrating an example of a hardware structure of the base station 10, the terminal 20, and the network node 30 according to an embodiment of the present invention.
[Fig. 7] is a drawing illustrating an example of a structure of a vehicle 2001 according to an embodiment of the present invention.

### DESCRIPTION OF EMBODIMENTS

Hereinafter, one or more embodiments of the present invention will be described by referring to the drawings. It is to be noted that the embodiments described below are examples. Embodiments of the present invention are not limited to the following embodiments.

In an operation of a wireless communication system according to an embodiment the present invention, the conventional techniques will be used appropriately. It should be noted that, although the conventional techniques may be the conventional LTE, the conventional techniques are not limited to the conventional LTE. The term "LTE" is used herein in a broad sense to encompass LTE-Advanced, schemes following LTE-Advanced (for example, NR), or a wireless LAN (Local Area Network), unless otherwise specified.

In an embodiment of the present invention, "configuring" a radio parameter or the like may refer to pre-configuring a predetermined value, or may refer to configuring a radio parameter notified from a network node 30 or a terminal 20.

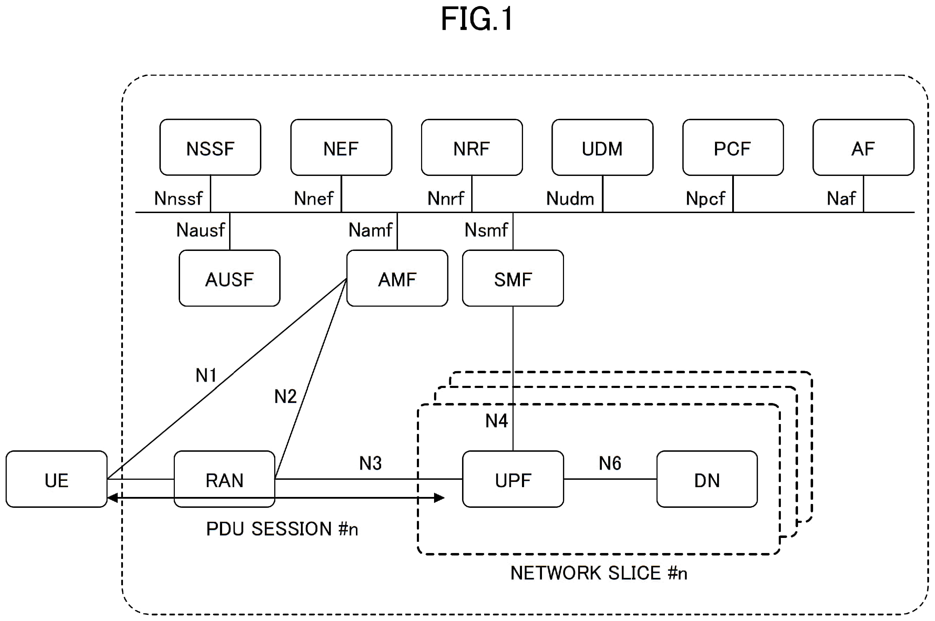

Fig. 1 is a drawing for describing an example of a communication system. As illustrated in Fig. 1, the communication system includes a UE (terminal 20) and a plurality of network nodes 30. Hereinafter, one network node 30 corresponds to one function. However, a single network node 30 may implement a plurality of functions, and a plurality of network nodes 30 may implement a single function. In addition, the "connection" described below may be a logical connection or a physical connection.

A RAN (Radio Access Network) is a network node 30 having a radio access function, may include a base station 10, and is connected to a UE, an AMF (Access and Mobility Management Function), and a UPF (User Plane Function). The AMF is a network node 30 having functions including termination of a RAN interface, termination of NAS (Non-Access Stratum), registration management, connection management, reachability management, and mobility management. The UPF is a network node 30 having functions including a PDU (Protocol Data Unit) session point to an external DN (Data Network), packet routing and forwarding, and QoS (Quality of Service) handling in a user plane. The UPF and the DN constitute a network slice. In a wireless communication network according to an embodiment of the present invention, a plurality of network slices are established.

The AMF is connected to the UE, the RAN, an SMF (Session Management Function), an NSSF (Network Slice Selection Function), a NEF (Network Exposure Function), an NRF (Network Repository Function), a UDM (Unified Data Management), an AUSF (Authentication Server Function), a PCF (Policy Control Function), and an AF (Application Function). The AMF, SMF, NSSF, NEF, NRF, UDM, AUSF, PCF, and AF are network nodes 30 that are interconnected via interfaces Namf, Nsmf, Nnssf, Nnef, Nnrf, Nudm, Nausf, Npcf, and Naf, respectively, based on their respective services.

The SMF is a network node 30 having functions including session management, allocation and management of a UE's IP (Internet Protocol) address, a DHCP (Dynamic Host Configuration Protocol) function, an ARP (Address Resolution Protocol) proxy, and a roaming function. The NEF is a network node 30 having a function of notifying a different network function (NF) of capabilities and events. The NSSF is a network node 30 having functions including selection of a network slice to which the UE connects, determination of allowed NSSAI (Network Slice Selection Assistance Information), determination of NSSAI to be configured, and determination of an AMF set to which the UE connects. The PCF is a network node 30 having a function of performing policy control of the network. The AF is a network node 30 having a function of controlling an application server. The NRF is a network node 30 having a function of discovering an NF instance that provides a service. The UDM is a network node 30 having a function of managing subscriber data and authentication data. The UDM is connected to a UDR (User Data Repository) that stores the data. The UDM may further include an ARPF (Authentication Credential Repository and Processing Function) having a function of processing and managing authentication information, and an SIDF (Subscription Identifier De-concealing Function) having a function of decrypting encrypted identification information. Alternatively, the UDM may perform these functions by accessing a different network node having the ARPF or the SIDF.

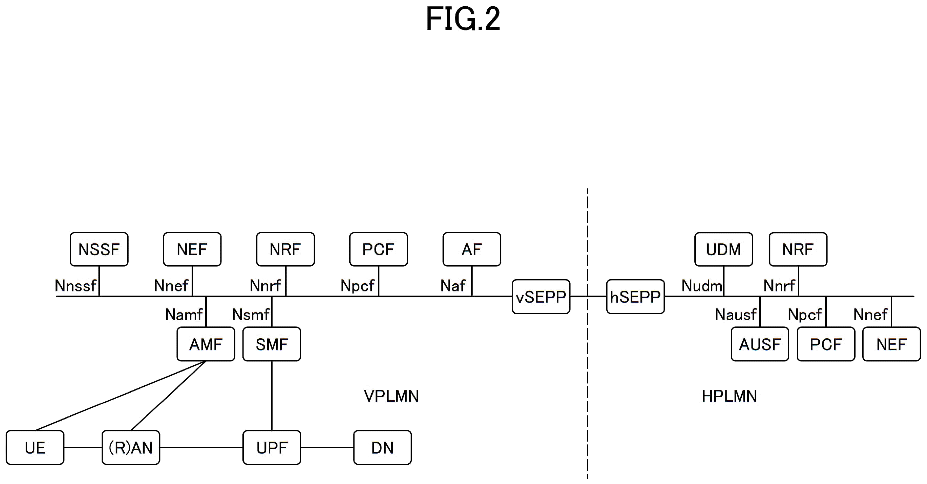

Fig. 2 is a drawing for describing an example of the communication system under a roaming environment. As illustrated in Fig. 2, the network includes a UE (terminal 20) and a plurality of network nodes 30. Hereinafter, one network node 30 corresponds to one function. However, a single network node 30 may implement a plurality of functions, and a plurality of network nodes 30 may implement a single function. In addition, the "connection" described below may be a logical connection or a physical connection.

A RAN is a network node 30 having a radio access function, and is connected to a UE, an AMF, and a UPF. The AMF is a network node 30 having functions including termination of a RAN interface, termination of a NAS, registration management, connection management, reachability management, and mobility management. The UPF is a network node 30 having functions including a PDU session point to an external DN, packet routing and forwarding, and QoS handling in a user plane. The UPF and the DN constitute a network slice. In a wireless communication network according to an embodiment of the present invention, a plurality of network slices are established.

The AMF is connected to the UE, the RAN, an SMF, an NSSF, a NEF, an NRF, a UDM, an AUSF, a PCF, an AF, and an SEPP (Security Edge Protection Proxy). The AMF, SMF, NSSF, NEF, NRF, UDM, AUSF, PCF, and AF are network nodes 30 that are interconnected via interfaces Namf, Nsmf, Nnssf, Nnef, Nnrf, Nudm, Nausf, Npcf, and Naf, respectively, based on their respective services.

The SMF is a network node 30 having functions including session management, allocation and management of a UE's IP address, a DHCP function, an ARP proxy, and a roaming function. The NEF is a network node 30 having a function of notifying a different NF of capability and an event. The NSSF is a network node 30 having functions including selection of a network slice to which the UE connects, determination of allowed NSSAI, determination of NSSAI to be configured, and determination of an AMF set to which the UE connects. The PCF is a network node 30 having a function of performing policy control of the network. The AF is a network node 30 having a function of controlling an application server. The NRF is a network node 30 having a function of discovering an NF instance that provides a service. The SEPP is a non-transparent proxy that filters control-plane messages exchanged between PLMNs (Public Land Mobile Networks). As illustrated in Fig. 2, a vSEPP is an SEPP in a visited network, and an hSEPP is an SEPP in a home network.

As illustrated in Fig. 2, the UE is in a roaming environment in which the UE is connected to the RAN and the AMF of a VPLMN (Visited PLMN). The VPLMN and an HPLMN (Home PLMN) are connected via the vSEPP and the hSEPP. The UE can communicate with the UDM of the HPLMN via the AMF of the VPLMN, for example.

### (First Embodiment)

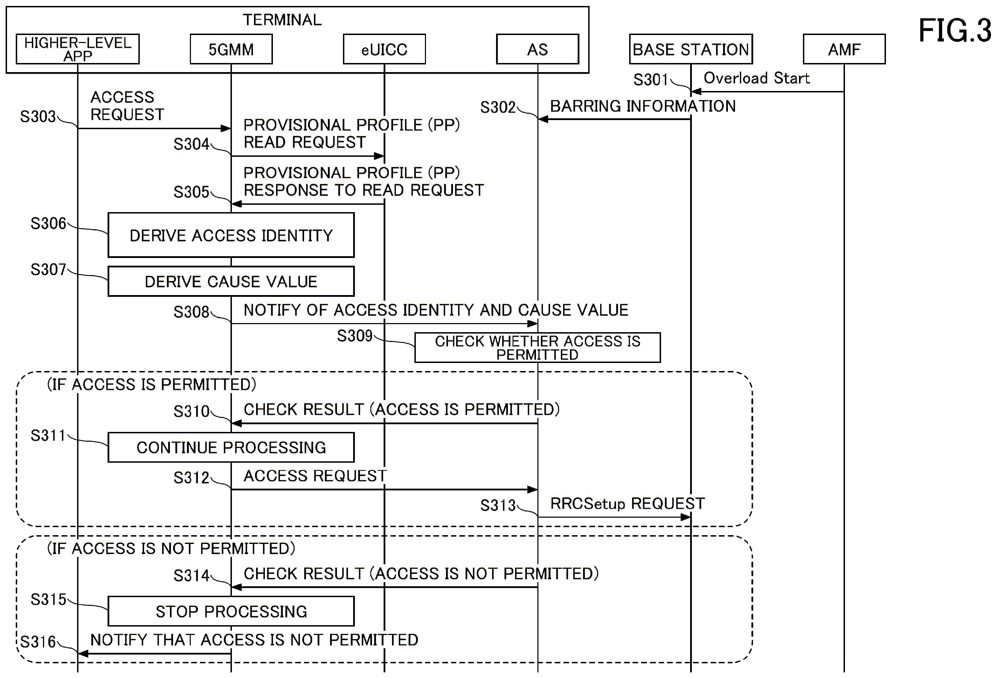

A first embodiment will be described. In the first embodiment, a procedure for executing access control, in the communication system, on terminals that access the network using a provisional profile, in distinction from terminals that access the network using an operational profile, will be described. Fig. 3 is a drawing illustrating an example of a sequence diagram according to an embodiment of the present invention. In the sequence diagram illustrated in Fig. 3, the terminal 20 performs communication between a higher-level application (referred to as a "higher-level app"), 5GMM (5GS Mobility Management), an eUICC (embedded Universal Integrated Circuit Card), and an AS (Access Stratum) within the terminal 20. The 5GMM is a protocol in a NAS (Non-Access Stratum; see Non-Patent Document 2), and refers to an entity in the terminal that handles this protocol. In this latter sense, the 5GMM communicates with the eUICC and the AS within the terminal 20. The AS in the terminal 20 communicates with the base station 10. The eUICC has a provisional profile (PP) and an operational profile (OP). The provisional profile (PP) is a profile used to perform initial setup before the network is used based on the operational profile (OP). The operational profile (OP) is a profile used to utilize services of a mobile operator based on a formal contract with the mobile operator. Hereinafter, processing in each step of the sequence diagram in Fig. 3 will be described.

Step S301: The AMF transmits, to the base station 10, an Overload Start message (see Sections 8.7.7.2 and 9.2.6.14 of Non-Patent Document 3) indicating that the AMF is under high load. Herein, the Overload Start includes an Overload Response (see Section 9.3.1.104 of Non-Patent Document 3) that requests a specified operation. The Overload Response includes an Overload Action (see Section 9.3.1.105 of Non-Patent Document 3) that specifies the requested operation. Herein, the Overload Action includes a newly defined configured value (for example, denoted as "Permit OP only") that indicates that access is permitted to only the terminal 20 using the operational profile. That is, this configured value indicates that no access control is applied to the terminal 20 using the operational profile, whereas access control is applied to the terminal 20 using the provisional profile or a profile different from the operational profile. Moreover, the Overload Start includes a Traffic Load Reduction Indication (see Section 9.3.1.106 of Non-Patent Document 3), which specifies, as an access reduction ratio, a ratio of terminals 20 for which access is not permitted to the terminals subject to access control. For example, if the value of the Traffic Load Reduction Indication is 80, it indicates that access is not permitted to 80% of the terminals 20.

Step S302: The base station 10 transmits, to the AS of the terminal 20, barring information for restricting call origination performed by the terminal 20, in accordance with the message received in Step S301. The barring information is transmitted as an SIB1 message (see Section 6.2.2 of Non-Patent Document 4) in the RRC protocol. Herein, a new number (for example, 4) indicating access by the terminal 20 using the provisional profile is defined as an access identity number (see, for example, Section 4.5.2 of Non-Patent Document 2). Further, configuration information (for example, denoted as "uac-BarringFactorForAI4") is newly defined for configuring a ratio of terminals 20 for which access is permitted with respect to the new number. The base station 10 configures, for the configuration information, a ratio (for example, 20%) of terminals 20 for which access is permitted using the provisional profile (PP), in accordance with a ratio (for example, 80%) of terminals 20 for which access is not permitted to terminals 20 using the operational profile (OP) for access, the latter ratio being specified in the message received in Step S301.

Step S303: The higher-level application of the terminal 20 transmits, to the 5GMM of the terminal 20, an access request to the network using the provisional profile (PP).

Step S304: The 5GMM of the terminal 20 transmits, to the eUICC of the terminal 20, a read request for the provisional profile (PP).

Step S305: The eUICC of the terminal 20 reads the provisional profile (PP) in response to the request received in Step S304 and transmits, to the 5GMM of the terminal 20, a response to the request.

Step S306: The 5GMM of the terminal 20 derives the access identity corresponding to access using the provisional profile (PP). Herein, the number to be derived is a new number (for example, 4) indicating access by the terminal 20 using the provisional profile (PP), as described in Step S302.

Step S307: The 5GMM of the terminal 20 derives a cause value (RRC Establishment Cause, see Section 4.5.6 of Non-Patent Document 2) corresponding to the access identity derived in Step S306. Herein, the cause value to be derived is a newly defined cause value corresponding to the access identity derived in Step S306, the cause value indicating that the terminal 20 is accessing the network using the provisional profile (PP) (for example, denoted as "pp in use").

Step S308: The 5GMM of the terminal 20 notifies the AS of the terminal 20 of the access identity derived in Step S306 and the cause value derived in Step S307.

Step S309: The AS of the terminal 20 checks whether access to the network is permitted, based on the barring information received in Step S308 and the access identity received in Step S306. For example, when the ratio of terminals 20 permitted to access with the access identity restricted by the barring information is A% (that is, the number of terminals 20 permitted to access is limited to less than A%), the AS of the terminal 20 generates a random number equal to or greater than 0 and less than 1. If the generated random number is less than A/100 (for example, less than 0.1 when A is 10%), the AS determines that access is permitted; otherwise, the AS determines that access is not permitted (see Section 5.3.14.5 of Non-Patent Document 4).

If the check result indicates that access is permitted, the processing in Steps S310 to S313 is executed. If the check result indicates that access is not permitted, the processing in Steps S314 to S316 is executed.

### (IF Check Result Indicates that Access is Permitted)

Step S310: The AS of the terminal 20 transmits, to the 5GMM of the terminal 20, the check result (access permitted) determined in Step S309.

Step S311: The 5GMM of the terminal 20 continues the processing for accessing the network using the provisional profile (PP) based on the check result (access permitted) received in Step S310.

Step S312: The 5GMM of the terminal 20 requests the AS of the terminal 20 to initiate access to the network using the provisional profile (PP).

Step S313: The AS of the terminal 20 transmits an RRC SetupRequest (see Section 6.2.2 of Non-Patent Document 4) to the base station 10. This message includes the cause value received in Step S308 (RRC Establishment Cause = "pp in use"). This message may also be referred to as a radio connection setup request.

### (IF Check Result Indicates that Access is not Permitted)

Step S314: The AS of the terminal 20 transmits, to the 5GMM of the terminal 20, the check result (access not permitted) determined in Step S309.

Step S315: The 5GMM of the terminal 20 stops the processing for accessing the network using the provisional profile (PP) based on the check result (access not permitted) received in Step S314.

Step S316: The 5GMM of the terminal 20 notifies the higher-layer application of the terminal 20 that access to the network using the provisional profile (PP) is not permitted.

According to the above embodiment, access control can be executed, in the communication system, on terminals that access the network using a setting profile, in distinction from terminals that access the network using an operational profile.

### (First Modification)

A first modification of the first embodiment will be described using the sequence diagram in Fig. 3.

Step S301: The AMF transmits, to the base station 10, an Overload Start message indicating that the AMF is under high load, as described in the above-described first embodiment.

Step S302: The base station 10 initiates access control for the terminals 20 in the cell, in response to the message received in Step S301. That is, the base station 10 performs access control in the cell without transmitting, to the AS of the terminal 20, barring information for restricting access by the terminal 20.

Subsequently, as in the description of the first embodiment, the processing from Step S303 to Step S308 is executed on the terminal 20. Herein, since the AS of the terminal 20 has not received any barring information from the base station 10, the terminal 20 determines that access to the network is permitted. Accordingly, the processing of Steps S309 to S312 and the processing of Steps S314 to S316 are not executed. That is, the terminal 20 subsequently executes the processing of Step S313.

The base station 10 checks whether the terminal 20 is permitted to access the network based on the Overload Start received in Step S301 and the RRC SetupRequest received from the AS of the terminal 20. Specifically, the base station 10 checks whether the terminal 20 that uses the provisional profile (PP) to access the network is permitted to access the network, based on: a configured value "Permit OP only" which is included in the Overload Action of the Overload Start and indicates that only terminals 20 that use the operational profile (OP) are permitted for access; a value of the Traffic Load Reduction Indication specifying the ratio of terminals 20 that are not permitted access; and a cause value that is configured in an RRC SetupRequest (RRC Establishment Cause = "pp in use") and indicates that the terminal 20 uses the provisional profile (PP) for access. The base station 10 may calculate the ratio of terminals for which access is permitted (for example, 20%) from the ratio of terminals for which access is not permitted (for example, 80%). The checking method is the same as the method executed by the terminal 20 in Step S309 of the first embodiment.

If the check result indicates that access is permitted, the base station 10 continues processing to allow the terminal 20 to connect to the network.

If the check result indicates that access is not permitted, the base station 10 stops the processing. Furthermore, the base station 10 may transmit, to the terminal 20, a message notifying that the RRC SetupRequest received from the terminal 20 is not accepted.

According to the above embodiment, access control can be executed, in the communication system, on terminals that access the network using a provisional profile, in distinction from terminals that access the network using an operational profile.

### (Second Modification)

A second modification of the first embodiment will be described. In the second modification, a terminal 20 has two types of provisional profiles (PP): one for priority use (for example, for police, firefighting, and the like) and one for general use. Herein, when the general-use provisional profile (PP) is employed, the same processing as in the first embodiment is executed. Hereinafter, a case where the priority provisional profile (PP) is employed will be described with reference to the sequence diagram in Fig. 3.

Steps S301 and S302 are executed in the same manner as in the first embodiment described above.

Step S303: The higher-level application of the terminal 20 transmits, to the 5GMM of the terminal 20, an access request to the network using the priority provisional profile (PP).

Step S304: The 5GMM of the terminal 20 transmits, to the eUICC of the terminal 20, a read request for the priority provisional profile (PP).

Step S305: The eUICC of the terminal 20 reads the priority provisional profile (PP) in response to the request received in Step S304 and transmits, to the 5GMM of the terminal 20, a response to the request.

Step S306: The 5GMM of the terminal 20 derives the access identity corresponding to access using the priority provisional profile (PP). Herein, the number that is derived is the number "1," which indicates priority access (see Section 4.5.2 of Non-Patent document 2).

Step S307: The 5GMM of the terminal 20 derives a cause value (RRC Establishment Cause = "mps-PriorityAccess", see Section 4.5.6 of Non-Patent Document 2) corresponding to the access identity value derived in Step S306.

Step S308: The 5GMM of the terminal 20 notifies the AS of the terminal 20 of the access identity derived in Step S306 and the cause value derived in Step S307. Herein, in the case of using the priority provisional profile (PP) to access the network, the terminal 20 does not follow the barring information received in Step S302. That is, the terminal 20 determines that access to the network is permitted, and therefore does not execute the processing of Steps S309 to S312 or Steps S314 to S316, and proceeds directly to the processing of Step S313 described below.

Step S313: The AS of the terminal 20 transmits an RRC SetupRequest to the base station 10. This message includes the cause value received in Step S308 (RRC Establishment Cause = "mps-PriorityAccess"). This message may also be referred to as a radio connection setup request.

According to the above-described processing, in the second modification, access control is executed such that a terminal that uses a general provisional profile is distinguished from a terminal that uses an operational profile when accessing. Additionally, a terminal that uses the priority provisional profile to access is allowed to operate as a priority terminal without being subject to any access control, separately from terminals that use the operational profile to access.

According to the above embodiment, access control can be executed, in the communication system, on terminals that access the network using a provisional profile, in distinction from terminals that access the network using an operational profile.

### (Device Configuration)

Next, examples of functional configurations of the base station 10, the network node 30, and the terminal 20 that perform the above-described processes and operations will be described. The base station 10, the network node 30, and the terminal 20 each include functions for implementing the above embodiments. However, each of the base station 10, the network node 30, and the terminal 20 may include only some of the functions of the embodiments.

### <Base Station 10 and Network Node 30>

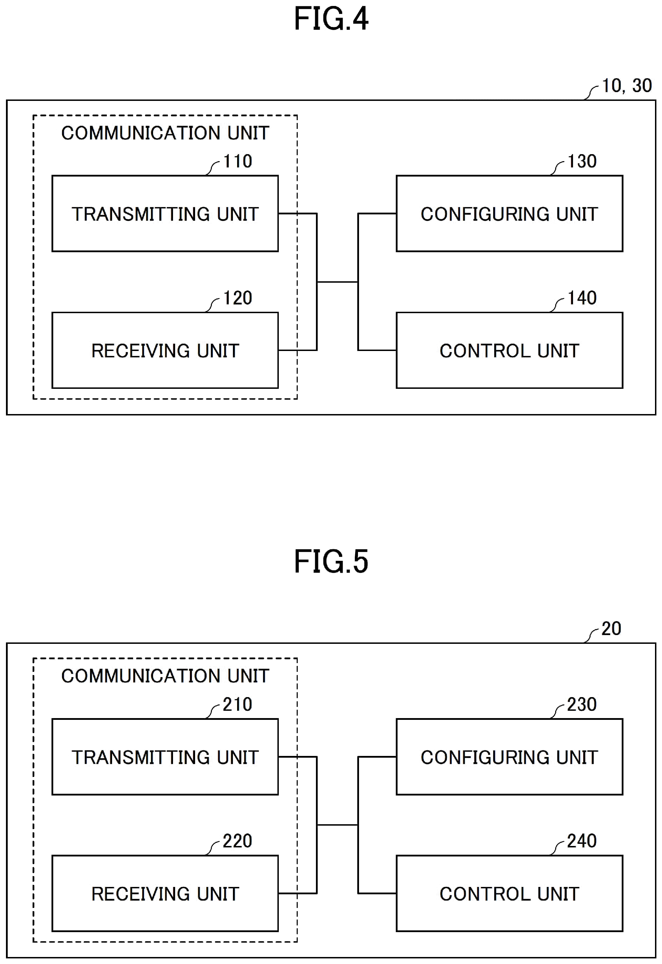

Fig. 4 is a drawing illustrating an example of functional configurations of the base station 10 and the network node 30. As illustrated in Fig. 4, the base station 10 has a transmitting unit 110, a receiving unit 120, a configuring unit 130, and a control unit 140. The functional configuration illustrated in Fig. 4 is merely an example. The functional division and the names of the functional units are not particularly limited, provided that the operation according to the embodiment of the present invention can be performed. Note that the network node 30 may have a functional configuration that is the same as that of the base station 10. The network node 30 having a plurality of different functions in the system architecture may be implemented as a plurality of network nodes 30 that are separated according to the functions.

The transmitting unit 110 includes a function of generating a signal to be transmitted to the terminal 20 or a different network node 30, and transmitting the signal via a wired or wireless link. The receiving unit 120 includes a function to receive various signals transmitted from the terminal 20 or a different network node 30, and to acquire, for example, higher-layer information from the received signals. A communication unit including the transmitting unit 110 and the receiving unit 120 may be configured.

The configuring unit 130 stores, in a memory, configuration information that is pre-configured and various pieces of configuration information to be transmitted to the terminal 20, and reads stored information from the memory as needed.

The control unit 140 performs processing related to access control of the terminal 20, as described in the embodiment. The control unit 140 also performs processing related to communication with the terminal 20. A functional unit related to signal transmission in the control unit 140 may be included in the transmitting unit 110, and a functional unit related to signal reception in the control unit 140 may be included in the receiving unit 120.

### <Terminal 20>

Fig. 5 is a drawing illustrating an example of a functional configuration of the terminal 20. As illustrated in Fig. 5, the terminal 20 has a transmitting unit 210, a receiving unit 220, a configuring unit 230, and a control unit 240. The functional configuration illustrated in Fig. 5 is merely an example. The functional division and the names of the functional units are not particularly limited, provided that the operation according to the embodiment of the present invention can be performed. A communication apparatus serving as a resource holder 20 may have a functional configuration that is the same as that of the terminal 20.

The transmitting unit 210 generates a transmission signal from transmission data and wirelessly transmits the transmission signal. The receiving unit 220 wirelessly receives various signals and extracts a higher-layer signal from a received physical-layer signal. The receiving unit 220 also has a function of receiving a control signal, a reference signal, or the like transmitted from the network node 30. A communication unit including the transmitting unit 210 and the receiving unit 220 may be configured.

The configuring unit 230 stores, in a memory, various types of configuration information received from the network node 30 by the receiving unit 220, and reads the stored configuration information from the memory as needed. The configuring unit 230 also stores configuration information that is pre-configured.

The control unit 240 performs processing and the like related to access control, as described in the embodiment. A functional unit related to signal transmission in the control unit 240 may be included in the transmitting unit 210, and a functional unit related to signal reception in the control unit 240 may be included in the receiving unit 220.

### (Hardware structure)

The block diagrams (Figs. 4 and 5) that have been used to describe the above embodiments show blocks in functional units. These functional blocks (components) may be implemented in a combination of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

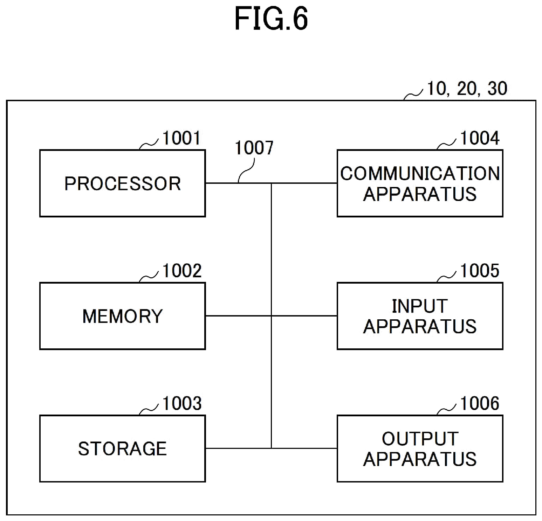

For example, the base station 10, the network node 30, the terminal 20, etc., according to an embodiment of the present disclosure may function as a computer for processing the radio communication method of the present disclosure. Fig. 6 is a drawing illustrating an example of a hardware structure of the base station 10 and the terminal 20 according to one embodiment. The network node 30 may have a hardware structure that is the same as the base station 10. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 4 may be implemented by control programs that are stored in the memory 1002 and that operate on the processor 1001. In addition, for example, the control unit 240 of the terminal 20 illustrated in Fig. 5 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

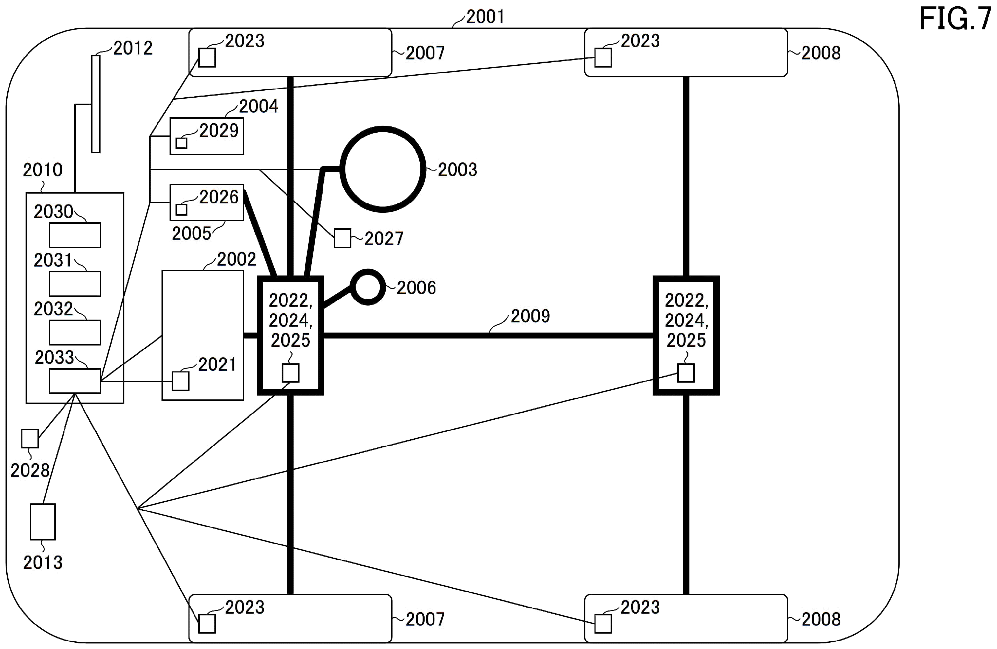

Fig. 7 shows an example of a configuration of a vehicle 2001. As shown in Fig. 7, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021 to 2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads, such as a millimeter wave radar, a LiDAR (Light Detection and Ranging), a camera, a positioning locator (for example, GNSS, etc.), map information (for example, high definition (HD) map, autonomous vehicle (AV) map, etc.), a gyro system (for example, IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and the sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through wireless communication. The communication module 2013 may be internal to or external to the electronic control unit 2010. The external devices may include, for example, a base station, a mobile station, or the like.

The communication module 2013 may transmit, to an external device via wireless communication, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, etc., mounted in the vehicle 2001.

### (Summary of Embodiments)

As described above, according to an embodiment of the present invention, a terminal is provided, which includes a receiving unit configured to receive, from a base station, barring information for restricting a terminal that uses a provisional profile for access; a control unit configured to, in a case of executing access using the provisional profile, derive a first access identity for the access using the provisional profile and a first cause value corresponding to the first access identity, and acquire, based on the first access identity, a first check result indicating whether the access is permitted to a network restricted by the barring information; and a transmitting unit configured to transmit, to the base station, a wireless connection configuration request including the first cause value in a case where the first check result indicates that the access is permitted.

According to the above configuration, access control can be executed, in the communication system, on terminals that access the network using a provisional profile, in distinction from terminals that access the network using an operational profile.

In a case of executing access using a priority provisional profile, the control unit may derive a second access identity for the access using the priority provisional profile and a second cause value corresponding to the second access identity, and determine that the access is permitted to the network restricted by the barring information, and the transmitting unit may transmit, to the base station, a wireless connection configuration request including the second cause value.

According to the above configuration, in the communication system, access control can be executed on terminals that access the network using a provisional profile, in distinction from terminals that access the network using an operational profile.

According to an embodiment of the present invention, a base station is provided, which includes a receiving unit configured to receive, from a network node, a message including a request for reducing access by terminals other than terminals that use an operational profile for access; a control unit configured to calculate, based on a ratio of access reduction included in the message, a ratio of access permission for terminals that use a provisional profile for access; and a transmitting unit configured to transmit, to the terminals, barring information for restricting the terminals that use the provisional profile for access, the barring information including the ratio of the access permission.

According to the above configuration, in the communication system, access control can be executed on terminals that access the network using a provisional profile, in distinction from terminals that access the network using an operational profile.

According to an embodiment of the present invention, a base station is provided, which includes a receiving unit configured to receive, from a network node, a message including a request for reducing access by terminals other than terminals that use an operational profile for access; a control unit configured to calculate, based on a ratio of access reduction included in the message, a ratio of access permission for terminals that use a provisional profile for access; and a receiving unit configured to receive, from a terminal, a wireless connection configuration request including a cause value that indicates that the provisional profile is used for access, in which the control unit is configured to execute, based on the ratio of the access permission, access control on the terminal that has transmitted the wireless connection configuration request.

According to the above configuration, in the communication system, access control can be executed on terminals that access the network using a provisional profile, in distinction from terminals that access the network using an operational profile.

According to an embodiment of the present invention, a communication method executed by a terminal is provided, the method includes: a step of receiving, from a base station, barring information for restricting a terminal that uses a provisional profile for access; a step of, in a case of executing access using the provisional profile, deriving a first access identity for the access using the provisional profile and a first cause value corresponding to the first access identity, and acquiring, based on the first access identity, a first check result indicating whether access is permitted to a network restricted by the barring information; and a step of transmitting, to the base station, a wireless connection configuration request including the first cause value in a case where the first check result indicates that the access is permitted.

According to the above configuration, in the communication system, access control can be executed on terminals that access the network using a provisional profile, in distinction from terminals that access the network using an operational profile.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (for example, DCI (Downlink Control Information), UCI (Uplink Control Information)), upper layer signaling (for example, RRC (Radio Resource Control) signaling, MAC (Medium Access Control) signaling, broadcast information (MIB (Master Information Block), SIB (System Information Block))), other signals, or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG), (xG (x is, for example, an integer or a decimal number)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, created, or standardized therefrom. A plurality of systems may be combined (for example, a combination of LTE or LTE-A and 5G, and the like) for application.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by the base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (for example, MME and S-GW).

The information or signals described in this disclosure may be output from a higher layer (or lower layer) to a lower layer (or higher layer). The information or signals may be input or output through multiple network nodes.

The input or output information may be stored in a specific location (for example, memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (for example, comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (for example, PUCCH, PDCCH) and information elements may be identified by any suitable names, the various names assigned to these various channels and information elements are not used as limitations.

In the present disclosure, the terms "Base Station (BS)," "Radio Base Station," "Base Station Apparatus," "Fixed Station," "NodeB," "eNodeB (eNB)," "gNodeB (gNB)," "Access Point," "Transmission Point," "Reception Point," "Transmission/Reception Point," "Cell," "Sector," "Cell Group," "Carrier," "Component Carrier," and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompass a wide variety of actions. For example, "determining" may be regarded as judging, calculating, computing, processing, deriving, investigating, looking up (search, inquiry) (for example, looking up in a table, a database or another data structure), ascertaining and the like. Also, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing, and the like. That is, "determining" may be regarded as a certain type of action related to determining. Further, "decision" may be read as "assuming," "expecting," or "considering," etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access." As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts," "circuits," "devices," etc.

In the case where the terms "include," "including" and variations thereof are used in the present disclosure, these terms are intended to be comprehensive in the same way as the term "comprising." Further, the term "or" used in the present specification is not intended to be an "exclusive or."

In the present disclosure, where an article is added by translation, for example "a," "an," and "the," the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

Each aspect/embodiment described in the present specification may be used independently, may be used in combination, or may be used by switching according to operations. Further, notification of predetermined information (for example, notification of "X") is not limited to an explicit notification, and may be performed by an implicit notification (for example, by not performing notification of the predetermined information).

As described above, the present disclosure has been described in detail. It is apparent to a person skilled in the art that the present disclosure is not limited to one or more embodiments of the present disclosure described in the present specification. Modifications, alternatives, replacements, etc., of the present disclosure may be possible without departing from the subject matter and the scope of the present disclosure defined by the descriptions of claims. Therefore, the descriptions of the present disclosure are for illustrative purposes only, and are not intended to be limitations to the present disclosure.

### DESCRIPTION OF THE REFERENCE NUMERALS

- 10: Base station
- 110: Transmitting unit
- 120: Receiving unit
- 130: Configuring unit
- 140: Control unit
- 20: Terminal
- 210: Transmitting unit
- 220: Receiving unit
- 230: Configuring unit
- 240: Control unit
- 30: Network node
- 1001: Processor
- 1002: Memory
- 1003: Storage
- 1004: Communication apparatus
- 1005: Input apparatus
- 1006: Output apparatus
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Revolution sensor
- 2023: Pneumatic sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication port (IO port)

## Claims

1. A terminal comprising:
a receiving unit configured to receive, from a base station, barring information for restricting a terminal that uses a provisional profile for access;
a control unit configured to, in a case of executing access using the provisional profile, derive a first access identity for the access using the provisional profile and a first cause value corresponding to the first access identity, and acquire, based on the first access identity, a first check result indicating whether the access is permitted to a network restricted by the barring information; and
a transmitting unit configured to transmit, to the base station, a wireless connection configuration request including the first cause value in a case where the first check result indicates that the access is permitted.

2. The terminal according to claim 1, wherein
the control unit is configured to, in a case of executing access using a priority provisional profile, derive a second access identity for the access using the priority provisional profile and a second cause value corresponding to the second access identity, and determine that the access is permitted to the network restricted by the barring information, and
the transmitting unit is configured to transmit, to the base station, a wireless connection configuration request including the second cause value.

3. A base station, comprising:
a receiving unit configured to receive, from a network node, a message including a request for reducing access by terminals other than terminals that use an operational profile for access;
a control unit configured to calculate, based on a ratio of access reduction included in the message, a ratio of access permission for terminals that use a provisional profile for access; and
a transmitting unit configured to transmit, to the terminals, barring information for restricting the terminals that use the provisional profile for access, the barring information including the ratio of the access permission.

4. A base station, comprising:
a receiving unit configured to receive, from a network node, a message including a request for reducing access by terminals other than terminals that use an operational profile for access;
a control unit configured to calculate, based on a ratio of access reduction included in the message, a ratio of access permission for terminals that use a provisional profile for access; and
a receiving unit configured to receive, from a terminal, a wireless connection configuration request including a cause value that indicates that the provisional profile is used for access, wherein
the control unit is configured to execute, based on the ratio of the access permission, access control on the terminal that has transmitted the wireless connection configuration request.

5. A communication method executed by a terminal, the method comprising:
a step of receiving, from a base station, barring information for restricting a terminal that uses a provisional profile for access;
a step of, in a case of executing access using the provisional profile, deriving a first access identity for the access using the provisional profile and a first cause value corresponding to the first access identity, and acquiring, based on the first access identity, a first check result indicating whether access is permitted to a network restricted by the barring information; and
a step of transmitting, to the base station, a wireless connection configuration request including the first cause value in a case where the first check result indicates that the access is permitted.
